# EUROPEAN PATENT APPLICATION

(11) **EP 4 484 789 A1**
(43) Date of publication of application: **01.01.2025**
(21) Application number: 23181518.4
(22) Date of filing: 26.06.2023
(51) Int. Cl.: F16F 9/348, F16F 9/512, F16F 9/18

(54) **INTAKE VALVE ARRANGEMENT, DAMPER COMPRISING THE SAME, AND METHOD FOR ADJUSTING AUXILIARY FLOW**

(71) Applicant: DRiV Automotive Inc., Northville, MI 48168 (US)
(72) Inventor: DEFERME, Stefan, Northville, MI 48168 (US)
(74) Representative: AWA Sweden AB

(57) **Abstract**

The present disclosure relates to an intake valve arrangement (1) for arrangement in a twin tube damper (100) which comprises respective ports (101, 102) for connecting to a compression valve device (301) and a rebound valve device (302), the intake valve arrangement (1) comprising: an intake valve body (2, 21, 22) adapted in size and shape to provide one or more flow channels (23, 231, 232); a compression side intake valve (31, 211); a rebound side intake valve (32, 212); the intake valve arrangement adapted so that in a compression stroke of the twin tube damper, the compression side intake valve (31, 211) enables an auxiliary flow into one or more of the one or more flow channels (23, 231, 232) and the rebound side intake valve (32, 212) acts as a check valve, and in a rebound stroke of the twin tube damper, the rebound side intake valve (32, 212) enables an auxiliary flow into one or more of the one or more flow channels (23, 231, 232) and the compression side intake valve (31, 211) acts as a check valve, wherein the intake valve arrangement (1) is adapted in size and shape for arrangement in an outer chamber (100A) of the twin tube damper (100) to be fluidly arranged in-between the respective ports (101, 102).

## Description

### Technical Field

The present disclosure relates to an intake valve arrangement, a damper comprising the same, and a method for regulating auxiliary flow, and in particular an intake valve arrangement for arrangement in a twin tube damper, a twin tube damper comprising the same, and a method for regulating auxiliary flow in a twin tube damper.

### Background

Dampers are typically used in conjunction with automotive suspension systems or other suspension systems to control movement of wheels of a vehicle relative to a body of a vehicle. In order to control movement, dampers are generally connected between the sprung (body) and the unsprung (suspension/drivetrain) masses of the vehicle. The dampers control movement of the wheels by limiting fluid flow past a piston of the damper. The fluid flows past the piston, e.g., via channels of the piston, when the damper is moved toward a compressed or extended position. The channels may have a fixed opening size. Resistance to movement is provided by the channels limiting an amount of fluid that flows therethrough. The resistance to movement may increase exponentially as movement speed is increased.

Discs may be used to control flow of fluid through the channels, e.g., by flexing or translating to increase or decrease a size of an opening at one end of the channel. Changing the opening size may change force response characteristics of the damper assembly. For example, increasing the opening size may decrease resistance to movement and decreasing the opening size may increase resistance to movement.

Force response characteristics can be further adjusted by means of one or more valve devices for further regulating fluid flow in a damper, preferably in an adjustable manner, during compression and rebound. This however results in the necessity of having to redesign fluid flow channels to and from said one or more valve devices to facilitate cooperation. Depending on damper type and configuration, this is difficult to achieve in a satisfactory manner.

It is of interest to provide a solution which facilitates fluid flow to and from one or more valve devices to provide desired damping characteristics.

### Summary

It is an object of the present invention to provide an improved solution that alleviates at least some of the mentioned drawbacks with present solutions. A first object of the invention is to provide an intake valve arrangement for a twin tube damper to enable a particular type of flow, an auxiliary flow, between two valve devices and regulation thereof. The first object is solved by the invention of claim 1. A second object is to provide a damper of twin tube design enabling auxiliary flow between two valve devices and regulation thereof. The second object is solved by the invention of claim 14. A third object is to provide a method for regulating an auxiliary flow between two valve devices of a twin tube damper. The third object is solved by the method of claim 15.

The inventive concept of the invention is inspired by a type of piston valve arrangements adapted to provide one or more flow channels between axial sides of the piston along stroke axis, which flow channels can be restricted by means of disc valves arranged in the piston valve arrangement to regulate respective auxiliary flows. By redesigning this type of piston valve arrangement for stationary arrangement between an inner and outer tube of a damper of twin tube design, the same or improved auxiliary flow functionality can be integrated for twin tube dampers, in particular those twin tube dampers comprising a piston valve arrangement in which it is difficult to integrate a desired auxiliary flow functionality. The inventive concept moreover facilitates tuning of auxiliary flow as a new valve arrangement based on the inventive concept would be located at a more advantageous position for configuration of the auxiliary flow functionality and facilitate disassembly and assembly associated with configuration of the auxiliary flow functionality.

According to a first aspect of the invention, an intake valve arrangement is provided for arrangement in a twin tube damper which comprises respective ports for connecting to a compression valve device and a rebound valve device. The intake valve arrangement comprises: an intake valve body adapted in size and shape to provide one or more flow channels. The intake valve arrangement comprises: a compression side intake valve. The intake valve arrangement comprises: a rebound side intake valve. The intake valve arrangement is adapted so that: in a compression stroke of the twin tube damper, the compression side intake valve enables an auxiliary flow via one or more of the one or more flow channels and the rebound side intake valve acts as a check valve. The intake valve arrangement is adapted so that: in a rebound stroke of the twin tube damper, the rebound side intake valve enables an auxiliary flow via one or more of the one or more flow channels and the compression side intake valve acts as a check valve. The intake valve arrangement is adapted in size and shape for arrangement in an outer chamber of the twin tube damper to be fluidly arranged in-between the respective ports.

By the intake valve arrangement being adapted to be arranged in an outer chamber of a twin tube damper, the intake valve arrangement enables an alternative solution for providing an auxiliary flow between two valve devices and regulation thereof. Thereby, the invention solves the first object of the invention. Tuning an auxiliary flow of a piston valve arrangement typically requires extensive disassembly of the damper. Therefore, the intake valve arrangement further facilitates tuning of auxiliary flow by being arranged at a more convenient location because fewer disassembly steps are necessary. In addition, since the intake valve arrangement allows for its one or more flow channels to be fluidly arranged closer to the ports of the damper respectively connecting to the compression valve device and the rebound valve device than flow channels in a corresponding piston valve arrangement, it reduces the number of locations where undesired fluid displacement effects may occur along the damping fluid flow path between a port for connecting to a valve device and an auxiliary flow opening of the intake valve arrangement. Thereby, auxiliary flow provided by the intake valve arrangement and the behavior of the overall damper may resemble simulations more accurately, which further facilitates tuning of auxiliary flow enabled by the intake valve arrangement.

Moreover, each intake valve of the intake valve arrangement may serve as an auxiliary flow valve or a check valve depending on stroke direction of the damper during use. This function is advantageous as it enables auxiliary flow control and may thus facilitate achieving advantageous damping characteristics. By auxiliary flow valve, it may be meant a valve providing an orifice with an orifice size which may or may not vary depending on pressure, or which varies depending on pressure within a pressure interval and is otherwise invariant to pressure outside the pressure interval.

For instance, each intake valve of the intake valve arrangement may provide an orifice with an orifice size which is substantially invariant in response to pressure within one or more pressure intervals. For instance, each intake valve of the intake valve arrangement may provide a plurality of orifices with respective orifice sizes which are substantially invariant in response to pressure within one or more pressure intervals.

By intake valve arrangement, it may be meant a valve arrangement for controlling the flow of a fluid medium into a flow channel, such as a flow channel intended to function at least partially during use as an auxiliary flow channel. By auxiliary flow channel, it may be meant a channel adapted to guide an auxiliary flow during use.

By auxiliary flow it may be meant a flow that shortcuts one or more valve elements, for instance a compression valve device and a rebound valve device. The auxiliary flow may be provided by means of one or more flow channels. A flow channel serving as an auxiliary flow channel may have or be associated with an orifice which may or may not vary in size depending on pressure. Orifice size may be substantially constant for at least one or more pressure intervals to provide fixed flow cross-section into an auxiliary flow channel. For instance, orifice size may vary depending on pressure when the pressure is below a threshold value and be substantially constant otherwise. For instance, orifice size may vary depending on pressure when the pressure is between a first threshold value and a second threshold value and be substantially constant otherwise. Threshold values may be adjusted by valve configuration.

In contrast, a bleed flow may be understood as a flow passing through an orifice which does not vary in size depending on pressure, for instance a fixed orifice or a needle valve. The intake valve arrangement may be adapted so that any of the intake valves may provide one or more orifices that may vary in size depending on pressure within a pressure interval and when pressure is outside this pressure interval the one or more orifices does not vary in size. In these situations, auxiliary flow passing through said one or more orifices may then take on characteristics of bleed flow.

By twin tube damper, it may be meant a damper comprising an inner cylinder and an outer cylinder, thereby defining a first damping fluid space within the inner cylinder and a second damping fluid space between the inner cylinder and the outer cylinder. Thus, it may be said that the intake valve arrangement is adapted to be arranged in, e.g., the second damping fluid space or the outer chamber.

By fluidly arranged, it may be meant that an element A is arranged relative an element B so that a damping fluid path is established between the element A and the second element B or may be established whenever any adjustable restrictions along the damping fluid path are set to open. By fluidly connected, it may be meant that element A and element B are in damping fluid communication with one another.

By the compression or rebound side intake valve regulating damping fluid flow, it may be meant that said intake valve is actuated to change size of a respective orifice of said one or more flow channels from an initial size of said respective orifice. Said change may involve reducing or increasing the size of said respective orifice. Said intake valve may be associated with an initial valve state being an open valve state and a regulated valve state with a reduced orifice into one or more of said one or more flow channels. Said intake valve may be associated with a plurality of regulated valve states with differently sized orifices into one or more of said one or more flow channels. Said intake valve may be adapted so that the transition between the initially open state and any of the aforementioned regulated valve states is stepless.

By orifice it may be meant an opening through which damping fluid may flow, which orifice may be either fixed in size or variable in size. Moreover, it should be understood in the context of the application that an orifice is not limited in geometric shapes, such as a circular hole, but may be provided in other shapes as well. It should also be understood that an orifice may be formed by a single valve element or by two or more valve elements.

The intake valve arrangement may be adapted to be fluidly arranged in-between ports connecting to a compression valve device and a rebound valve device respectively. The compression valve device may be adapted to control or impact damping fluid flow during a compression stroke of the damper. The rebound valve device may be adapted to control or impact damping fluid flow during a rebound stroke of the damper. The compression valve device and/or the rebound valve device may be electro-mechanical valve devices.

The intake valve body adapted in size and shape to provide one or more flow channels. By one or more flow channels, it may be meant the intake valve arrangement is adapted to provide one, two, three, four, five, six, seven, eight, nine, or ten, or more flow channels. Any one of or any combination of said one or more flow channels may have a compression side opening associated with the compression side of the intake valve arrangement and/or a rebound side opening associated with the rebound side of the intake valve arrangement. Any one of or any combination of said one or more flow channels may comprise a portion with a circular cross-section in longitudinal direction, or any other suitable cross-section in longitudinal direction. The intake valve body may be adapted to provide a plurality of flow channels selected from said any combination of said one or more flow channels, wherein said plurality of flow channels are provided symmetrically about the intake valve body.

The intake valve arrangement may be adapted in size and shape for arrangement in a particular size and type of twin tube dampers. By adapted in size and shape, it may mean that e.g., the intake valve body is adapted with a size extending in a length direction, a thickness direction, and an extension direction. The length direction and the thickness direction may be perpendicular to one another. The length direction and the extension direction may be perpendicular to one another. The length direction may align with an axial direction of the twin tube damper when the intake valve arrangement is arranged therein. The thickness direction may align with a thickness direction or a radial direction of the twin tube damper when the intake valve arrangement is arranged therein. The extension direction may align with a circumferential direction or align with a direction perpendicular to the axial direction and the width direction of the twin tube damper.

The intake valve arrangement may be adapted to extend in a circumferential direction about an axis to define a recess or through-hole into which an inner cylinder of the damper. The through-hole may substantially extend along a center axis of the intake valve arrangement from a compression side to a rebound side of the intake valve arrangement. The intake valve arrangement may be adapted to define an inner radial side and an outer radial side. The inner radial side of the intake valve arrangement may be adapted to provide an inner mating surface. The inner mating surface may be adapted to mate with a surface of the inner cylinder, or a surface of a first connecting member arranged between the inner cylinder and the intake valve body. The outer radial side of the intake valve arrangement may be adapted to provide an outer mating surface. The outer mating surface may be adapted to mate with a surface of the outer cylinder, or a surface of a second connecting member arranged between the outer cylinder and the intake valve body. The first connecting member and/or the second connecting member may be adapted to be removable adapter elements which may be selected from a predetermined group of connecting members of various sizes to allow the intake valve arrangement to be arranged in a greater selection of twin tube dampers.

The intake valve arrangement comprises spring means for returning the compression side intake valve and the rebound side intake valve into respective initial valve states in response to damping fluid pressure no longer overcoming respective pressure level thresholds. Each of the compression side intake valve and the rebound side intake valve may be actuated to return to an initial state by a compression spring means and a rebound spring means, respectively. The compression spring means may be a spring element or resilience of a valve element of the compression side intake valve. The rebound spring means may be a spring element or resilience of a valve element of the rebound side intake valve.

According to one embodiment, the compression side intake valve comprises: a compression side valve seat, and a compression side valve element adapted to be displaceable relative the compression side valve seat to vary orifice size of a compression side orifice associated with one of the one or more flow channels in response to damping fluid pressure overcoming a compression side pressure level threshold. In addition, or alternatively, the rebound side intake valve comprises: a rebound side valve seat and a rebound side valve element adapted to be displaceable relative the rebound side valve seat to vary orifice size of a rebound side orifice associated with one of the one or more flow channels in response to damping fluid pressure overcoming a rebound side pressure level threshold. By this, orificeorifices of, or associated with, the one or more flow channels may be adjustable in a reliable manner.

By compression side pressure level threshold, it may be meant the pressure level required on the compression side for actuating the compression side intake valve into a regulating state. The compression side intake valve may be adapted to be adjustable so as to adjust the compression side pressure level threshold.

By rebound side pressure level threshold, it may be meant the pressure level required on the rebound side for actuating the rebound side intake valve into a regulating state. The rebound side intake valve may be adapted to be adjustable so as to adjust the rebound side pressure level threshold.

By damping fluid pressure overcoming a compression or rebound side pressure level threshold, it may mean that the damping fluid pressure at least initially exceeds said pressure level.

The compression side valve element may be adapted to be moveable relative the compression side valve seat in an axial direction of the intake valve arrangement to regulate an auxiliary flow. The compression side valve element may be adapted to flex relative the compression side valve seat in an axial direction of the intake valve arrangement to regulate an auxiliary flow. The compression side valve element may be adapted to engage with the compression side valve seat along a peripheral region of the compression side of the intake valve body. Said peripheral region may extend a full revolution in a circumferential direction. The compression side valve element may be adapted to engage with the compression side valve seat intermittently along said peripheral region.

The rebound side valve element may be adapted to be moveable relative the rebound side valve seat in an axial direction of the intake valve arrangement to regulate an auxiliary flow. The rebound side valve element may be adapted to flex relative the rebound side valve seat in an axial direction of the intake valve arrangement to regulate an auxiliary flow. The rebound side valve element may be adapted to engage with the rebound side valve seat along a peripheral region of the rebound side of the intake valve body. Said peripheral region may extend a full revolution in a circumferential direction. The rebound side valve element may be adapted to engage with the rebound side valve seat intermittently along said peripheral region.

According to one embodiment, the compression side orifice and/or the rebound side orifice is variable from a first open state to a second open state in response to pressure, wherein said orifice in the second open state has an orifice size which is substantially invariant in response to further pressure increase. The first open state may be associated with a first pressure interval. The second open state may be associated with a second pressure interval. The compression side orifice and/or the rebound side orifice may have an orifice size which is variable in response to pressure when the pressure is in an intermediate pressure interval between the first pressure interval and the second pressure interval. The intake valve arrangement may be adapted with one or more compression side orifices. The intake valve arrangement may be adapted with one or more rebound side orifices.

According to one embodiment, the compression side valve element and/or the rebound side valve element is a shim disc and said spring means for the respective valve element include resiliency of said shim disc or said shim discs. Said shim disc or shim discs may comprise a general disc geometry with a first flat surface and a second flat surface opposite the first flat surface. The shim disc may comprise one or more recesses or apertures fluidly connecting the first flat surface and the second flat surface for allowing a damping fluid flow there-through during use. By this, damping fluid flow may flow towards a respective valve seat in a direction laterally or radially away from a center axis of the compression side valve element and/or the rebound side valve element. The center axis may coincide or be parallel to a length axis of the intake valve arrangement. In addition to said springs means including resiliency of shim discs, the intake valve arrangement may comprise spring elements arranged to facilitate returning respective intake valve to an initial state.

According to one embodiment, the compression side valve seat and/or the rebound side valve seat provides a valve seat surface acutely angled with respect to a plane perpendicular to a displacement axis of the respective compression side valve element or the rebound side valve element. By this, the respective side valve element may engage with the respective valve seat in a facilitated manner, and optionally in a sequentially increasing manner. Said valve seat surface may extend a revolution in a circumferential direction, thereby providing a cone surface.

According to one embodiment, at least one valve element of the compression side valve element and the rebound side valve element is adapted so that during use an auxiliary flow flows in a lateral direction to a displacement axis of said valve element between said valve element and the intake valve body prior to flowing into an opening into a flow channel. By this, an auxiliary flow may be regulated in a facilitated manner. The intake valve arrangement may be adapted so that the auxiliary flow flows laterally inward with respect to a displacement axis, or laterally outward with respect to said displacement axis, before flowing past a respective side valve seat.

According to one embodiment, the intake valve arrangement comprises one or more shim discs arranged between one of the compression side valve element and the intake valve body, or between the rebound side valve element and the intake valve body. By arranging one or more shim discs between the compression side valve element and the intake valve body, the compression side pressure level threshold may be adjusted. By arranging one or more shim discs between the rebound side valve element and the intake valve body, the rebound side pressure level threshold may be adjusted. As an alternative to shim discs or as an addition, the intake valve arrangement may comprise distance elements adapted to be arranged between the compression side valve element and the rebound side valve element and the intake valve body, which then may also allow for adjustment of the respective pressure level thresholds.

According to one embodiment, the intake valve body comprises a compression side valve body portion and a rebound side valve body portion, and the intake valve body is further adapted to provide an auxiliary flow space between the compression side valve body portion and the rebound side valve body portion, wherein at least one of said one or more flow channels establishes fluid communication between said compression side and rebound side via said auxiliary flow space. Said at least one of said one or more flow channels may establish an additional flow path. By this, the intake valve arrangement may enable auxiliary flows from a plurality of flow channels to converge inside the intake valve arrangement allowing for more even pressure distribution within the intake valve arrangement and facilitating opening of the intake valve acting as a check valve.

According to one embodiment, the compression side intake valve and the rebound side intake valve are adapted to enable flow connection between the compression side and the rebound side of the intake valve arrangement regardless of pressure differential between compression side and rebound side. By this, there is always a flow connection between each side, and pressure buildup within the intake valve arrangement is prevented. Alternatively, the compression side intake valve and the rebound side intake valve are adapted to prevent flow connection between the compression side and the rebound side of the intake valve arrangement for an interval of pressure differential between the compression side and rebound side.

The compression side intake valve may be adapted to be in an open state when not subjected to a pressure differential. The compression side intake valve may be adapted to be in a closed state when not subjected to a pressure differential. The rebound side intake valve may be adapted to be in an open state when not subjected to a pressure differential. The rebound side intake valve may be adapted to be in a closed state when not subjected to a pressure differential. Either intake valve may be tuned in terms of initial state and at what pressure or pressure interval the intake valve actuates to vary orifice size.

According to one embodiment, the compression side valve body portion and the rebound side valve body portion are substantially symmetrical about a plane intersecting the auxiliary flow space. By this, the intake valve arrangement may be arranged in either axial orientation. In such a case, by compression side and rebound side of the intake valve arrangement, it is meant the side toward the compression chamber and the side toward the rebound chamber respectively.

According to one embodiment, the compression side valve body portion and the rebound side valve body portion are separate parts. By this, manufacturing of the intake valve arrangement may be facilitated. It may further facilitate manufacturing components of sufficient tolerances. Moreover, by the compression side valve body portion and the rebound side valve body portion being separate parts, it may facilitate assembly and disassembly of the intake valve arrangement.

According to one embodiment, at least one valve element of the compression side valve element and the rebound side valve element is at least partially fixated to the intake valve body by means of adjustment means for enabling adjustment of the initial position of said valve element relative the intake valve body. By this, it may reduce the necessity of incorporating additional elements specifically for retaining the intake valve arrangement in an assembled configuration. Said adjustment means may comprise an adjustment element. The adjustment element may comprise an elongated portion adapted to be inserted through a respective side valve element into the intake valve body. The elongated portion may comprise grooves for engaging with corresponding grooves provided in apertures of the intake valve body, or grooves provided on a locking member separate from the intake valve body. Said adjustment means may comprise one or more distance elements for arrangement between the intake valve body and a respective of the compression side valve element and the rebound side valve element. By this, the respective of the compression side valve element and the rebound side valve element may be forced to move in a particular manner in response to damping fluid pressure overcoming the respective compression side pressure level threshold and the rebound side pressure level threshold. The one or more distance elements may be adapted in size and shape to define a through-hole for receiving an adjustment element. The adjustment means may be adapted for setting an initial position of a side valve element relative the intake valve body.

According to one embodiment, said adjustment of the initial position of said one valve element relative the intake valve body involves inserting one or more shim discs adjacently to said valve element. Said one or more shim discs may be arranged between said intake valve body and said one valve element. One of said shim discs may be an orifice disc with one or more radial orifices permitting a predetermined auxiliary flow irrespective of the position of said one valve element.

According to one embodiment, the intake valve arrangement is adapted with a through-hole in which the inner cylinder of the damper is receivable. According to one embodiment, the intake valve arrangement is adapted to extend a full revolution in a peripheral direction of the outer chamber. The intake valve arrangement may comprise a substantially cylindrical geometry. By this, the intake valve arrangement may distribute damping fluid flow pressure substantially evenly on each side of the intake valve arrangement. The intake valve arrangement may also by this allow for free rotational orientation when arranged in a damper, thereby facilitating assembly.

According to one embodiment, the intake valve arrangement comprises one or more sealing members for reducing fluid flow along a radially outward side of the intake valve arrangement. The compression side valve body portion may comprise a radially outer recess for receiving a first sealing member. The rebound side valve body portion may comprise a radially outer recess for receiving a second sealing member. The intake valve arrangement may comprise one or more sealing member for reducing fluid flow along a radially inward side of the intake valve arrangement. The compression side valve body portion may comprise a radially inner recess for receiving a first sealing member. The rebound side valve body portion may comprise a radially inner recess for receiving a first sealing member. Said sealing members may be O-rings.

According to a second aspect, a damper adapted with a twin tube design is provided. The damper comprises an outer chamber, a compression valve device and a rebound valve device, wherein the compression valve device and the rebound valve device are in fluid communication with the outer chamber via respective ports, the damper comprising an intake valve arrangement according to the first aspect or any embodiments thereof, wherein the intake valve arrangement is arranged in the outer chamber and fluidly arranged between said respective ports.

According to a third aspect of the invention, a method for regulating an auxiliary flow in a twin tube damper between a compression valve device and a rebound valve device is provided. The method involves regulating said auxiliary flow by means of an intake valve arrangement according to the first aspect or any embodiments thereof fluidly arranged between the compression valve device and the rebound valve device. The method comprises the steps of: in response to compression side pressure overcoming a compression side pressure level threshold, regulate the auxiliary flow by means of the compression side intake valve; in response to rebound side pressure overcoming a rebound side pressure level threshold, regulate the auxiliary flow by means of the rebound side intake valve, and in response to compression side pressure and/or rebound side pressure no longer overcoming respective pressure level thresholds, return the respective intake valves to a respective initial state. The method may comprise steps directly or indirectly disclosed in relation to the intake valve arrangement any embodiments thereof.

The invention is defined by the appended independent claims, with embodiments being set forth in the appended dependent claims, in the following description and in the drawings.

### Brief Description of the Drawings

The invention will in the following be described in more detail with reference to the enclosed drawings, wherein:
Fig. 1 shows a cross-sectional side view of a damper comprising the intake valve arrangement according to one embodiment of the invention;
Fig. 2 shows a cross-sectional perspective view of a damper comprising the intake valve arrangement according to one embodiment of the invention;
Fig. 3 shows a perspective view of the intake valve arrangement according to one embodiment of the invention;
Fig. 4 shows an exploded view of the intake valve arrangement according to one embodiment of the invention;
Fig. 5 shows an axial side view of the intake valve arrangement according to one embodiment of the invention;
Fig. 6a shows a side view of the intake valve arrangement according to one embodiment of the invention and Fig. 6b shows a side view of the intake valve arrangement according to the same embodiment but rotated 90 degrees;
Fig. 7a shows a cross-sectional side view of the intake valve arrangement according to one embodiment of the invention and Fig. 7b shows a cross-sectional side view of the intake valve arrangement according to the same embodiment but rotated 90 degrees;
Fig. 8a-b show a cross-sectional side view of the intake valve arrangement according to different embodiments of the invention;
Fig. 9 shows different damping force curves with respect to stroke velocity;
Fig. 10 shows a schematic flow chart of a method according to one embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

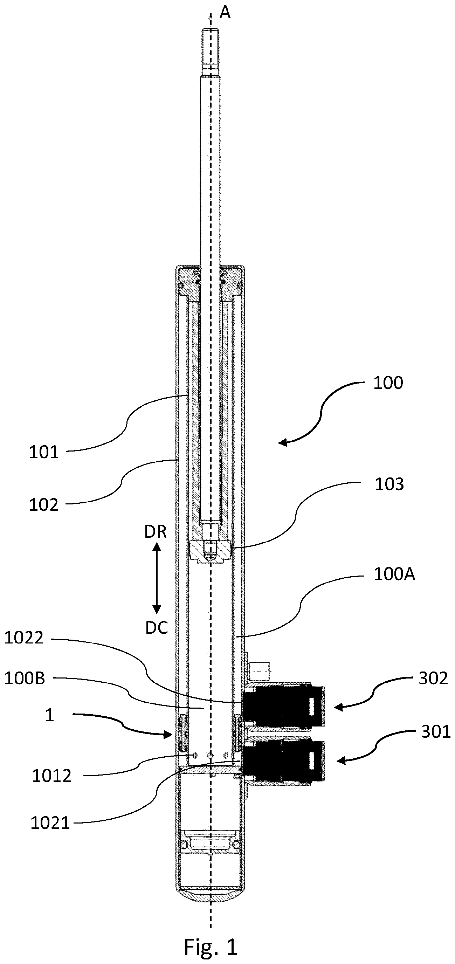

Fig. 1 shows a cross-sectional side view of a damper 100 comprising an intake valve arrangement 1. The damper 100 is a twin tube damper comprising an inner cylinder 101 providing an inner chamber 100B and a piston 103 is moveable within said inner chamber 100B during stroke motion. The damper 100 comprises an outer cylinder 102 arranged to enclose the inner cylinder 101 to form an outer chamber 100A between the inner cylinder 101 and the outer cylinder 102. The inner cylinder 101 is provided with one or more apertures 1012 for establishing fluid connection between the inner chamber 100B and the outer chamber 100A. As shown in Fig. 1, the inner cylinder comprises a first set of apertures 1012 located at a first axial position of the inner cylinder 101. The inner cylinder may comprise a second set of apertures located at a second axial position of the inner cylinder 101. The piston 103 is moveable in a compression stroke direction DC and a rebound stroke direction DR. When the piston 103 moves in a rebound stroke direction DR, pressure buildup on a rebound side of the outer chamber 100A may be provided. When the piston 103 moves in a compression stroke direction DC, pressure buildup on a compression side of the outer chamber 100A may be provided.

The damper 100 comprises a first port 1021 connecting to a compression valve device 301 and a second port 1022 connecting to a rebound valve device 302. The compression valve device 301 and the rebound valve device 302 are adapted to regulate damping fluid flow following sufficient pressure build-up on compression side of the outer chamber 100A and rebound side of the outer chamber 100A, respectively. The first and second port 1021, 1022 are exemplified in Fig. 1 as being offset axially from one another. While the first and second ports 1021, 1022 are exemplified as being arranged axially at different positions, the ports 1021, 1022 may be offset in a circumferential direction, or offset in both an axial direction and a circumferential direction. The intake valve arrangement 1 may be adapted in shape and size to cooperate with any such first and second port 1021, 1022 configurations to establish and provide regulation of an auxiliary flow in response to damping fluid pressure between a compression side and a rebound side of the intake valve arrangement 1. The intake valve arrangement 1 may be adapted to regulate an auxiliary flow from the compression side to the rebound side in response to damping fluid pressure. The intake valve arrangement 1 may be adapted to regulate an auxiliary flow from the rebound side to the compression side in response to damping fluid pressure.

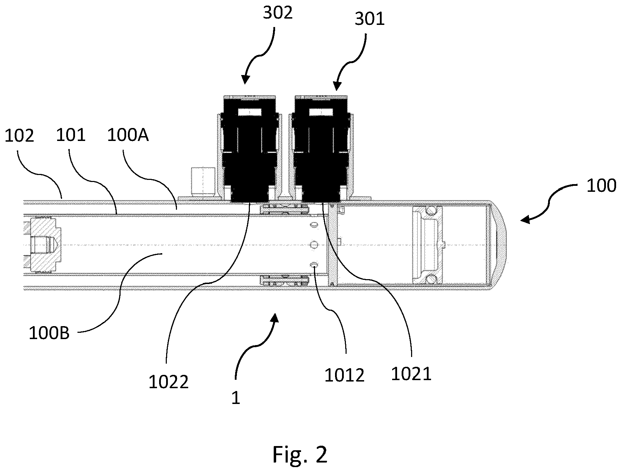

As shown in Fig. 2, which shows a cross-sectional perspective view of the damper 100 comprising an intake valve arrangement 1, the intake valve arrangement 1 is fluidly arranged between the two ports 1021, 1022 each connecting to a respective valve device 301, 302. The intake valve arrangement 1 is adapted in shape and size to extend in a circumferential direction in the outer chamber 100A, for instance a full revolution around the inner cylinder 101, thereby allowing for a larger surface area of respective intake valves of the intake valve arrangement. The intake valve arrangement 1 may according to one embodiment, as here exemplified in Fig. 2, to be substantially symmetrical about an axial plane. The intake valve arrangement 1 comprises a compression side intake valve and a rebound side intake valve. The intake valve arrangement 1 may be adapted to enable an auxiliary flow flowing from the rebound side to the compression side by means of the rebound side intake valve. The auxiliary flow also passes the compression side intake valve which then acts as a check valve. The intake valve arrangement 1 may be adapted to enable an auxiliary flow flowing from the compression side to the rebound side by means of the compression side intake valve. The auxiliary flow also passes the rebound side intake valve which then acts as a check valve. The intake valve arrangement 1 may be adapted with one or more flow channels for guiding auxiliary flow between the compression side and the rebound side. The compression side intake valve and the rebound side intake valve may respectively enable auxiliary flow into said one or more flow channels and act as check valve accordingly depending on flow direction.

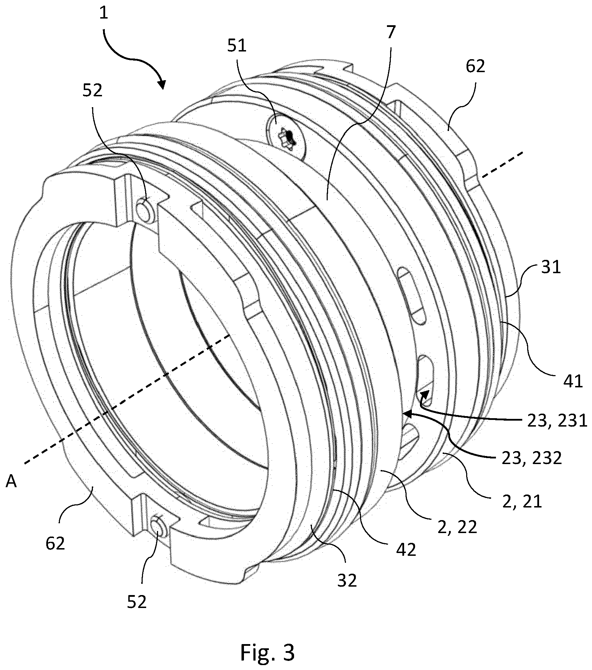

Fig. 3 shows a perspective view of the intake valve arrangement 1 according to one embodiment of the invention. The intake valve arrangement 1 comprises an intake valve body 2, 21, 22 adapted in size and shape to provide one or more flow channels 23, 231, 232. Each flow channel is provided to guide an auxiliary flow. One or more of the one or more flow channels 23, 231, 232 may extend between a compression side and a rebound side of the intake valve arrangement 1. One or more of the one or more flow channels 23, 231, 232 may extend only partially from one side of the compression side and the rebound side into a space defined by the intake valve arrangement 1 adapted to be in fluid communication with the other side of the compression side and the rebound side. As exemplified in Fig. 3, the intake valve body 2, 21, 22 may be formed by two intake valve body portions 21, 22 coupled to one another by means of an intermediate body portion 7. The intake valve body portions 21, 22 may extend radially a first distance and the intermediate body portion may extend radially a second distance less than the first distance. By this, an auxiliary flow space may be defined into which one or more flow channels connect.

The intake valve arrangement 1 comprises a compression side intake valve 31, 211. The compression side intake valve 31, 211 is adapted for regulating damping fluid flow into one or more of the one or more flow channels 23, 231, 232 in response to damping fluid pressure overcoming a compression side pressure level threshold. If the damping fluid pressure overcomes the compression side pressure level threshold, then the compression side intake valve 31, 211 may restrict a corresponding orifice into the one or more flow channels, thereby regulating said auxiliary flow. If the damping fluid pressure no longer overcomes the compression side pressure level threshold, then the compression side intake valve 31, 211 may be adjusted to increase a corresponding orifice into the one or more flow channels. As an example, the compression side intake valve 31, 211 may comprise a compression side valve seat 211, and a compression side valve element 31 adapted to be displaceable relative the compression side valve seat 211. The compression side valve element 31 may be adjusted relative the compression side valve seat 211 to adjust a orifice or a restriction into the one or more flow channels. By this, the compression side intake valve may regulate said damping fluid flow in response to damping fluid pressure overcoming said compression side pressure level threshold. The intake valve arrangement 1 may be adapted so that the compression side pressure level threshold is adjustable by modifying the responsiveness of the compression side intake valve, for instance by inserting one or more distance elements adjacent to the compression side valve element 31.

The intake valve arrangement 1 comprises a rebound side intake valve 32, 212. The rebound side intake valve 32, 212 is adapted for regulating damping fluid flow into one or more of the one or more flow channels 23, 231, 232 in response to damping fluid pressure overcoming a rebound side pressure level threshold. If the damping fluid pressure overcomes the rebound side pressure level, then the rebound side intake valve 32, 212 may restrict a corresponding orifice into the one or more flow channels, thereby regulating said auxiliary flow. If the damping fluid pressure no longer overcomes the rebound side pressure level threshold, then the rebound side intake valve 32, 212 may be adjusted to increase a corresponding orifice into the one or more flow channels. As an example, the rebound side intake valve 32, 212 may comprise a rebound side valve seat 212, and a rebound side valve element 32 adapted to be displaceable relative the rebound side valve seat 212. The rebound side valve element 32 may be adjusted relative the rebound side valve seat 212 to adjust a orifice or a restriction into the one or more flow channels. By this, the rebound side intake valve may regulate said damping fluid flow in response to damping fluid pressure overcoming said rebound side pressure level threshold. The intake valve arrangement 1 may be adapted so that the rebound side pressure level threshold is adjustable by modifying the responsiveness of the rebound side intake valve, for instance by inserting one or more shims adjacent to the rebound side valve element 32.

The intake valve arrangement 1 comprises spring means for returning the compression side intake valve 31, 211 and the rebound side intake valve 32, 212 into respective initial valve states in response to damping fluid pressure no longer overcoming respective pressure level thresholds. As an example, said spring means may be provided by the resilience of one or more components of the respective side intake valves. In addition, or as an alternative, the intake valve arrangement 1 may comprise separate springs arranged to actuate respective side intake valves to return to initial states.

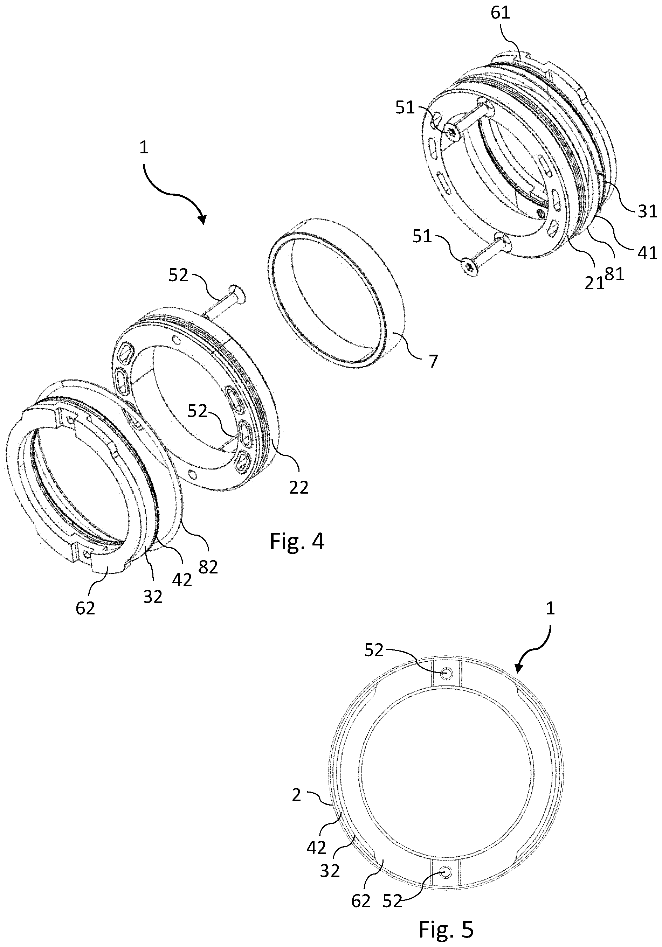

As also shown in Fig. 3, the intake valve arrangement 1 is at least partially assembled together by means of locking means 51, 52 which extend through respective locking apertures provided in the intake valve body 2, 21, 22, and in particular in the portions 21, 22, and the compression side intake valve 31, 211 and the rebound side intake valve 32, 212. This is further shown in Fig. 4 which illustrates an exploded view of the intake valve arrangement 1. The locking means 51, 52 engage with corresponding engaging means 61, 62 arranged at respective ends of the intake valve arrangement 1. As exemplified in Fig. 4, the locking means are bolts with threads adapted to engage with threads in said engaging means 61, 62. The engaging means may be adapted to extend around the inner cylinder of the twin tube damper. The locking means 51, 52 and the engaging means 61, 62 may serve as adjustment means for adjusting the compression side pressure level threshold and the rebound side pressure level threshold respectively by enabling insertion and locking of one or more shim discs which impact the responsiveness of the compression side valve element 31 and the rebound side valve element 32. The locking means may alternatively include or be rivets or any other suitable locking means. Rivets may be advantageous for reduce manufacturing cost.

According to one embodiment, the compression side intake valve 31, 211 comprises: a compression side valve seat 211, and a compression side valve element 31 adapted to be displaceable relative the compression side valve seat 211 to vary orifice size of a compression side orifice associated with one or more of the one or more flow channels in response to damping fluid pressure overcoming a compression side pressure level threshold. The compression side orifice may be variable from a first open state to a second open state in response to pressure, wherein said orifice in the second open state has an orifice size which is substantially invariant in response to further pressure increase. The compression side intake valve 31, 211 may provide one or more such orifices which may be varied in size. One separate orifice may be associated with each flow channel. One common orifice may be associated to a plurality of flow channels, such as two or more or all flow channels.

According to one embodiment, the rebound side intake valve 32, 212 comprises: a rebound side valve seat 212 and a rebound side valve element 32 adapted to be displaceable relative the rebound side valve seat 212 to vary orifice size of a rebound side profice associated with one or more of the one or more flow channels in response to damping fluid pressure overcoming a rebound side pressure level threshold. The rebound side orifice may be variable from a first open state to a second open state in response to pressure, wherein said orifice in the second open state has an orifice size which is substantially invariant in response to further pressure increase. The rebound side intake valve 31, 211 may provide one or more such orifices which may be varied in size. One separate orifice may be associated with each flow channel. One common orifice may be associated to a plurality of flow channels, such as two or more or all flow channels.

Fig. 5 shows an axial view of the intake valve arrangement 1 according to one embodiment of the invention. The intake valve arrangement 1 may be adapted with a substantially cylindrical geometry with a through-hole for receiving an inner cylinder of the damper. The intake valve arrangement 1 may be adapted with means to engage with the inner cylinder of a damper. The intake valve arrangement 1 may be adapted with means to engage with the outer cylinder of a damper.

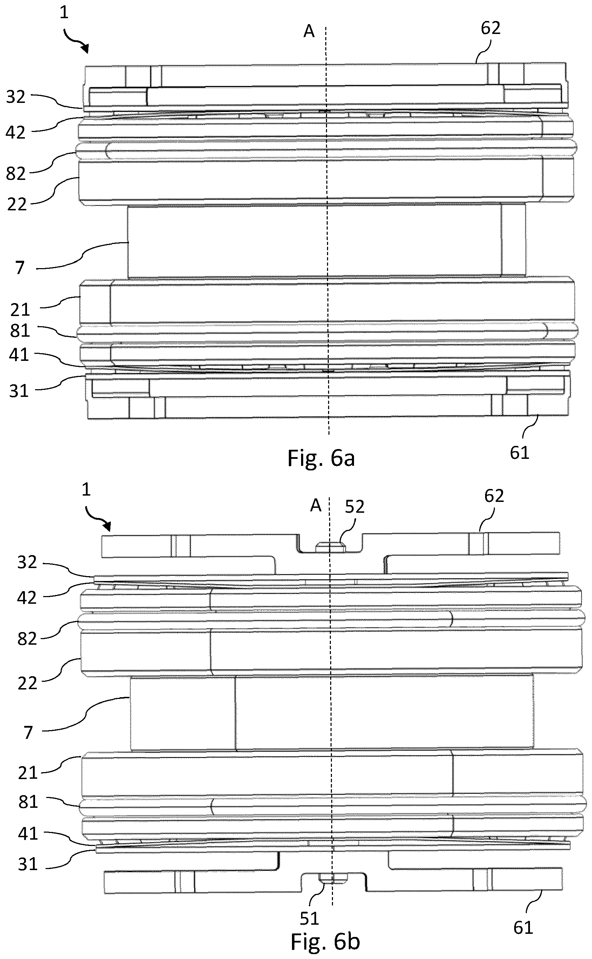

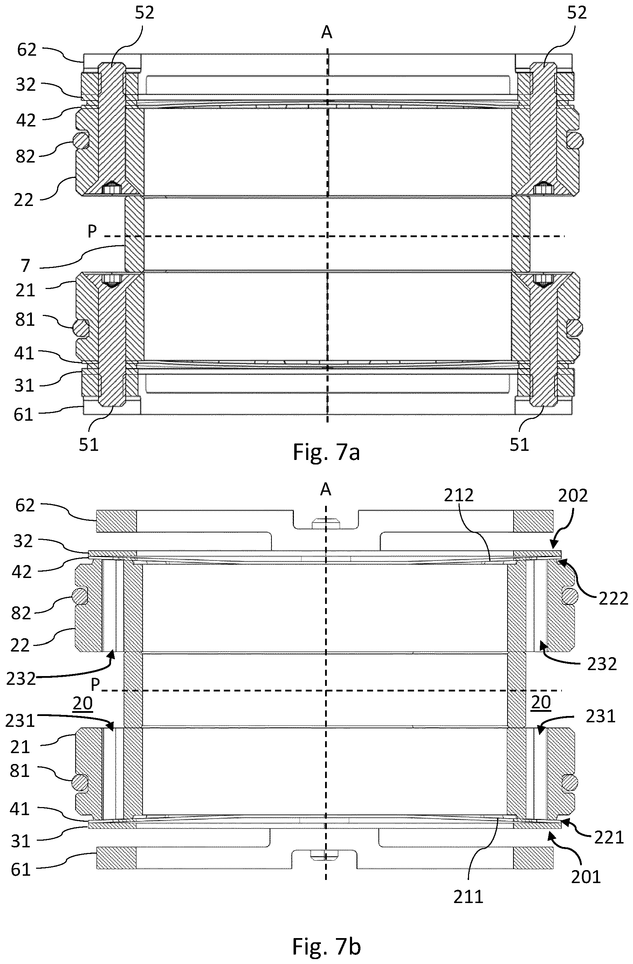

Figs. 6a and 6b show respective side views of the intake valve arrangement 1, wherein 6a shows the intake valve arrangement 1 in a first orientation and 6b shows the intake valve arrangement 1 in a second orientation rotated 90 degrees from the first orientation. As shown, the intake valve arrangement 1 extends generally along an axis A. Figs. 7a and 7b show respective cross-sectional side views of the intake valve arrangement 1, wherein 7a shows the intake valve arrangement 1 in a first orientation and 7b shows the intake valve arrangement 1 in a second orientation rotated 90 degrees from the first orientation. As shown in Figs. 6a, 6b, 7a, 7b, the elements of the intake valve arrangement 1 are substantially arranged one after another in an axial direction. The intake valve body 2, 21, 22 comprises a compression side valve body portion 21 and a rebound valve body portion 22. The intake valve body 2 may further comprise an intermediate body portion 7. Alternatively, the intermediate body portion 7 may be a separate member. The compression side valve body portion 21 and the rebound side valve body portion 22 are arranged on opposite sides of the intermediate body portion 7. The compression side valve element 31 is attached to the compression side valve body portion 21 by means of locking means 51 engaging with engaging means 61. A shim disc 41 such as an orifice disc is arranged between the compression side valve body portion 21 and the compression side valve element 31. The rebound side valve element 32 is attached to the rebound side valve body portion 22 by means of locking means 52 engaging with engaging means 62. A shim disc 42 such as an orifice disc is arranged between the rebound side valve body portion 22 and the rebound side valve element 32. The compression side valve element 21 and the rebound side valve element 22 may also be shim discs. Moreover, the compression side valve body portion 21 is adapted with a groove for receiving a sealing member 81. The rebound side valve body portion 22 is adapted with a groove for receiving a sealing member 82. The sealing members 81, 82 are o-rings.

The compression side valve body portion 21 is adapted with two flow channels 231. The rebound side valve body portion 22 is adapted with two flow channels 232. The respective flow channels 231, 232 are in fluid communication with an auxiliary flow gap space 20 located between the compression side valve body portion 21 and the rebound side valve body portion 22. The intake valve arrangement 1 is substantially symmetrical about a symmetry plane P intersecting said auxiliary flow gap space 20.

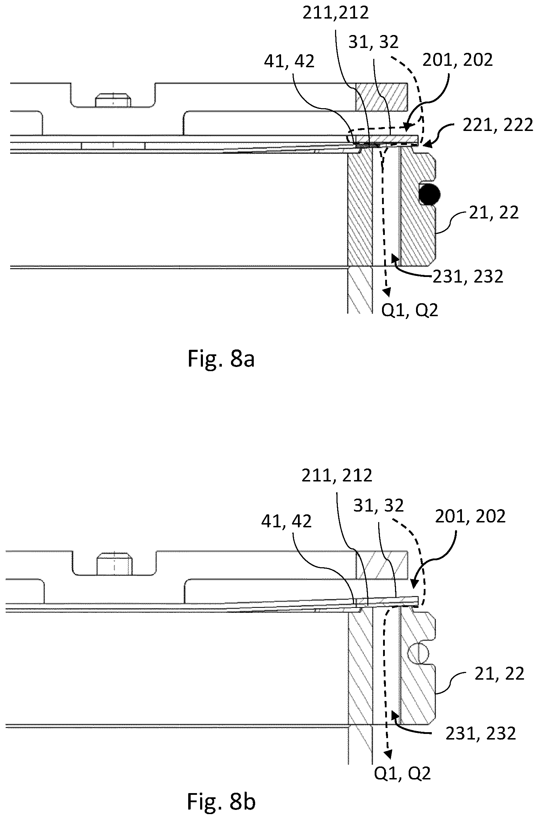

Figs. 8a-b show a cross-sectional side view of the intake valve arrangement 1 according to different embodiments of the invention. The illustrations of Figs. 8a, 8b can represent both the arrangement on a compression side of the intake valve arrangement 1 and/or the arrangement on a rebound side of the intake valve arrangement 1, hence the respective reference signs. In the embodiment shown in Fig. 8a, the intake valve arrangement 1 comprises an orifice disc 41, 42 arranged between the valve element 31, 32 and the valve body portion 21, 22. The orifice disc 41, 42 is adapted to provide a valve seat orifice 221, 222 extending at least in a radial direction between the valve element 31, 32 and the valve seat 211, 212. By this, it may prevent complete closing of the intake valve into the flow channel 231, 232, thereby allowing an auxiliary flow Q1, Q2 to flow through the intake valve. In the embodiment shown in Fig. 8b, the intake valve arrangement 1 comprises a shim disc 41, 42 without said valve seat orifice 221, 222. By this, the auxiliary flow Q1, Q2 may be more restricted for a given damping fluid pressure in comparison with the embodiment illustrated in Fig. 8a.

Moreover, the compression side valve seat 211 and/or the rebound side valve seat 212 may be adapted to provide a valve seat surface acutely angled with respect to a plane P perpendicular to a displacement axis A of the respective compression side valve element 31 or the rebound side valve element 32. By this, the respective side valve element 31, 32 may sequentially interact with the respective side valve seat 211, 212 to regulate a damping fluid flow. Moreover, at least one valve element of the compression side valve element 31 and the rebound side valve element 32 is adapted so that during use an auxiliary flow flows in a lateral direction to a displacement axis A of said valve element 31, 32 between said valve element 31, 32 and the intake valve body (2, 21, 22) prior to flowing into an opening into a flow channel 23, 231, 232.

In the embodiment depicted in Fig. 8a, auxiliary flow is enabled to flow from two opposite lateral directions. In the embodiment depicted in Fig. 8b, auxiliary flow is enabled to flow inwardly in a lateral direction. Auxiliary flow in lateral direction is enabled by e.g., slots or orifices in the respective side valve elements, or a lateral gap between valve seat 211, 212 and valve element 31, 32.

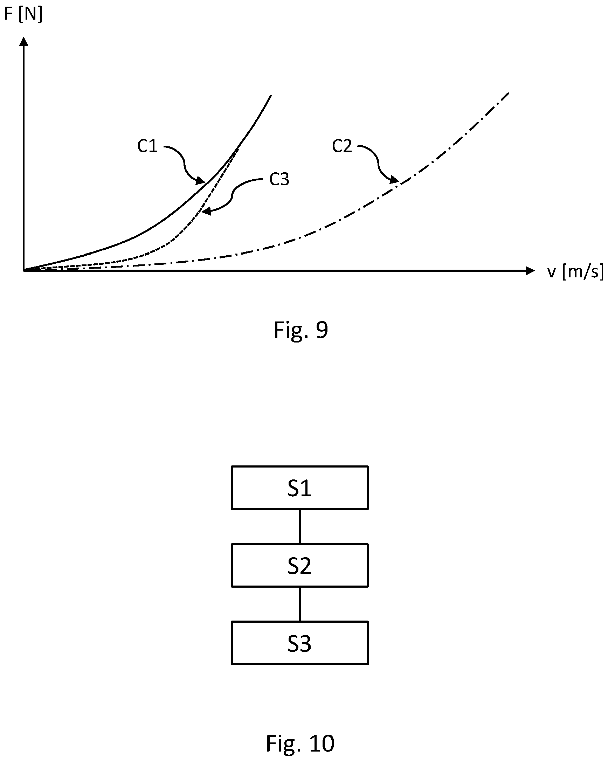

Fig. 9 shows different damping force curves with respect to stroke velocity. Damping force curve C1 illustrates a damping force curve obtained by a solution incorporating a fixed auxiliary opening, i.e., the auxiliary opening into the flow channels does not change with respect to damping fluid pressure. Damping fluid curve C2 illustrates a damping force curve obtained by a solution incorporating an open auxiliary opening, i.e., the auxiliary opening into the flow channels is enabled to change with respect to damping fluid pressure. Damping fluid curve C3 illustrates a damping force curve obtained by the invention, which in effect provides a damping force curve which combines characteristics of the damping fluid curve C1 and C2. As seen, the damping force is initially low for a low stroke speed with a behavior similar to that of damping fluid curve C2, then transitions into a rapid damping force increase resulting in a behavior similar to that of damping fluid curve C1. The intake valve arrangement herein disclosed enables the damping characteristic according to the damping fluid curve C3, in either stroke direction.

Fig. 10 shows a schematic flow chart of a method according to one embodiment of the invention. The method is for regulating an auxiliary flow in a twin tube damper 100 between a compression valve device 301 and a rebound valve device 302 by means of an intake valve arrangement 1. The intake valve arrangement 1 may be one of the intake valve arrangements 1 according to the first aspect or any embodiments thereof. The intake valve arrangement 1 is fluidly arranged between the compression valve device 301 and the rebound valve device 302. The method comprises the step of: in response to compression side pressure overcoming a compression side pressure level threshold, regulate S1 the auxiliary flow by means of the compression side intake valve 31, 211. The method comprises the step of: in response to rebound side pressure overcoming a rebound side pressure level threshold, regulate S2 the auxiliary flow by means of the rebound side intake valve 32, 212. The method comprises the step of: in response to compression side pressure and/or rebound side pressure no longer overcoming respective pressure level thresholds, return S3 the respective intake valves 31, 211; 32, 212 to a respective initial state.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. Intake valve arrangement (1) for arrangement in a twin tube damper (100) which comprises respective ports (1021, 1022) for connecting to a compression valve device (301) and a rebound valve device (302), the intake valve arrangement (1) comprising:
- an intake valve body (2, 21, 22) adapted in size and shape to provide one or more flow channels (23, 231, 232);
- a compression side intake valve (31, 211);
- a rebound side intake valve (32, 212);
the intake valve arrangement adapted so that
- in a compression stroke of the twin tube damper, the compression side intake valve (31, 211) enables an auxiliary flow via one or more of the one or more flow channels (23, 231, 232) and the rebound side intake valve (32, 212) acts as a check valve, and
- in a rebound stroke of the twin tube damper, the rebound side intake valve (32, 212) enables an auxiliary flow via one or more of the one or more flow channels (23, 231, 232) and the compression side intake valve (31, 211) acts as a check valve,
wherein the intake valve arrangement (1) is adapted in size and shape for arrangement in an outer chamber (100A) of the twin tube damper (100) to be fluidly arranged in-between the respective ports (101, 102).

2. The intake valve arrangement (1) according to claim 1, wherein
the compression side intake valve (31, 211) comprising: a compression side valve seat (211), and a compression side valve element (31) adapted to be displaceable relative the compression side valve seat (211) to vary orifice size of a compression side orifice associated with one or more of the one or more flow channels in response to damping fluid pressure overcoming a compression side pressure level threshold,
and/or
the rebound side intake valve (32, 212) comprising: a rebound side valve seat (212) and a rebound side valve element (32) adapted to be displaceable relative the rebound side valve seat (212) to vary orifice size of a rebound side orifice associated with one or more of the one or more flow channels in response to damping fluid pressure overcoming a rebound side pressure level threshold.

3. The intake valve arrangement (1) according to claim 2, wherein the compression side orifice and/or the rebound side orifice is variable from a first open state to a second open state in response to pressure, wherein said orifice in the second open state has an orifice size which is substantially invariant in response to further pressure increase.

4. The intake valve arrangement (1) according to any of claims 2-3, wherein the compression side valve element (31) and/or the rebound side valve element (32) is a shim disc and said spring means for the respective valve element (31, 32) include resiliency of said shim disc or said shim discs.

5. The intake valve arrangement (1) according to any of claims 2-4, wherein the compression side valve seat (211) and/or the rebound side valve seat (212) provides a valve seat surface acutely angled with respect to a plane (P) perpendicular to a displacement axis (A) of the respective compression side valve element (31) or the rebound side valve element (32).

6. The intake valve arrangement (1) according to any of claims 2-5, wherein at least one valve element of the compression side valve element (31) and the rebound side valve element (32) is adapted so that during use an auxiliary flow flows in a lateral direction to a displacement axis (A) of said valve element (31, 32) between said valve element (31, 32) and the intake valve body (2, 21, 22) prior to flowing into an opening into a flow channel (23, 231, 232).

7. The intake valve arrangement (1) according to any of claims 2-6, comprising one or more shim discs (41, 42) arranged between one of the compression side valve element (31) and the intake valve body (2, 21, 22), or between the rebound side valve element (32) and the intake valve body (2, 21, 22).

8. The intake valve arrangement (1) according to any preceding claims, wherein the intake valve body (2, 21, 22) comprises a compression side valve body portion (21) and a rebound side valve body portion (22), and the intake valve body (2, 21, 22) is further adapted to provide an auxiliary flow space (20) between the compression side valve body portion (21) and the rebound side valve body portion (22), wherein at least one of said one or more flow channels (23, 231, 232) establishes fluid communication between said compression side (201) and rebound side (202) via said auxiliary flow space (20).

9. The intake valve arrangement (1) according to claim 8, wherein the compression side valve body portion (21) and the rebound side valve body portion (22) are separate parts.

10. The intake valve arrangement (1) according to any of claims 2-7 or claims 8-9 when dependent on claim 2, wherein at least one valve element of the compression side valve element (31) and the rebound side valve element (32) is at least partially fixated to the intake valve body (2, 21, 22) by means of adjustment means (51, 61; 52, 62) for enabling adjustment of the initial position of said valve element (31, 32) relative the intake valve body (2, 21, 22).

11. The intake valve arrangement (1) according to claim 10, wherein said adjustment of the initial position of said one valve element (31, 32) relative the intake valve body (2, 21, 22) involves inserting one or more shim discs (41, 42) adjacently to said valve element (31, 32).

12. The intake valve arrangement (1) according to any preceding claims, wherein the intake valve arrangement (1) is adapted with a through-hole in which the inner cylinder of the damper is receivable.

13. The intake valve arrangement (1) according to any preceding claims, wherein the intake valve arrangement (1) comprises one or more sealing members (81, 82) for reducing fluid flow along a radially outward side of the intake valve arrangement (1).

14. Damper (100) adapted with a twin tube design, comprising an outer chamber (100A), a compression valve device (301) and a rebound valve device (302), wherein the compression valve device (301) and the rebound valve device (302) are in fluid communication with the outer chamber (100A) via respective ports (101, 102), the damper (100) comprising an intake valve arrangement (1) according to any preceding claims arranged in the outer chamber (100A) and fluidly arranged between said respective ports (101, 102).

15. Method for regulating an auxiliary flow in a twin tube damper (100) between a compression valve device (301) and a rebound valve device (302) by means of an intake valve arrangement (1) according to any of claims 1-13 fluidly arranged between the compression valve device (301) and the rebound valve device (302), comprising the steps of:
- in response to compression side pressure overcoming a compression side pressure level threshold, regulate (S1) the auxiliary flow by means of the compression side intake valve (31, 211),
- in response to rebound side pressure overcoming a rebound side pressure level threshold, regulate (S2) the auxiliary flow by means of the rebound side intake valve (32, 212),
- in response to compression side pressure and/or rebound side pressure no longer overcoming respective pressure level thresholds, return (S3) the respective intake valves (31, 211; 32, 212) to a respective initial state.
